# EUROPEAN PATENT SPECIFICATION

(11) **EP 4 207 876 B1**
(45) Date of publication and mention of the grant of the patent: **01.04.2026**
(21) Application number: 22215063.3
(22) Date of filing: 20.12.2022
(51) Int. Cl.: H04W 76/34

(54) **METHOD FOR HANDLING PDU SESSION ESTABLISHMENT WHEN MAXIMUM NUMBER OF PDU SESSIONS HAS BEEN REACHED**
VERFAHREN ZUR HANDHABUNG DER PDU-SITZUNGSHERSTELLUNG, WENN DIE HÖCHSTZAHL VON PDU-SITZUNGEN ERREICHT WURDE
PROCÉDÉ DE GESTION D'ÉTABLISSEMENT DE SESSION PDU LORSQU'UN NOMBRE MAXIMAL DE SESSIONS PDU A ÉTÉ ATTEINT

(30) Priority: 03.01.2022 US 202263296016 P; 12.12.2022 US 202218079616
(43) Date of publication of application: 05.07.2023
(73) Proprietor: MEDIATEK INC., Hsinchu City 30078 (TW)
(72) Inventor: LIN, Yuan-Chieh, 30078 Hsinchu City (TW)
(74) Representative: Habermann, Hruschka & Schnabel

(56) References cited:
- WO-A1-2020/155021
- WO-A1-2021/092561

## Description

### TECHNICAL FIELD

The disclosed embodiments relate generally to wireless communication, and, more particularly, to method of handling PDU session establishment when maximum number of PDU sessions has been reached.

### BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board has decided to focus the future NGMN activities on defining the end-to-end requirements for 5G new radio (NR) systems (5GS).

In 5GS, a protocol data unit (PDU) session defines the association between the UE and the data network that provides a PDU connectivity service. The PDU session establishment is a parallel procedure of PDN connection (bearer) procedure in 4G/LTE. Each PDU session is identified by a PDU session ID (PSI), and may include multiple QoS flows and QoS rules. Each PDU session can be established via a 5G access network (e.g.,3GPP radio access network (RAN), or via a non-3GPP access). The network and /or the UE can initiate different PDU session procedures, e.g., PDU session establishment, PDU session modification, and PDU session release, for managing the activation and deactivation of 5GS PDU sessions.

3GPP also introduced Multi-Access (MA) PDU session in 5GS. An MA PDU session can be configured to use one 3GPP access network or one non-3GPP access network at a time, or simultaneously one 3GPP access network and one non-3GPP access network. In addition, ATSSS (Access Traffic Steering, Switching, Splitting) is an optional feature that can be supported by the UE and the 5GC network to route data traffic across 3GPP access and non-3GPP access networks for the established MA PDU session. At any given time, the MA PDU session can have user-plane resources established on both 3GPP access (also referred as 3GPP 5GS leg) and non-3GPP access (also referred as non-3GPP 5GS leg), or on one access only (either 3GPP access or non-3GPP 5GS access). Furthermore, to utilized the broader coverage of LTE as compared to NR, a 4G EPS PDN connection can be established as the user-plane resource for a corresponding MA PDU session over 3GPP access (also referred as 3GPP PDN leg).

When the number of active 5GS PDU sessions reach the network's (PLMN or SNPN) maximum number of 5GS PDU sessions, a solution is sought on how to establish a new 5GS PDU session. For example, from WO 2021/092561 A1 and WO 2020/155021 A1 a corresponding method according to the preamble of claim 1 is known.

### SUMMARY

A method is proposed for handling a 5G PDU session establishment procedure when a maximum number of active 5G PDU sessions has been reached. When the number of active 5G PDU sessions in 5GS has reached the maximum number of active 5G PDU sessions as defined for the PLMN/SNPN, a UE needs to release an existing 5G PDU session in order to add a new 5G PDU session. In one novel aspect, the UE can select a 4G PDN connection and release the selected PDN connection to fulfill the requirement for the maximum number of active 5G PDU sessions. The selected 4G PDN connection is established as a user-plane resource for an 5G MA PDU session; by releasing the selected PDN connection, the UE is then able to establish a new 5G PDU session, including an emergency PDU session in 5GS.

In one embodiment, a UE maintains a number of active protocol data unit (PDU) sessions in a 5G system (5GS). The UE determines that the number of active PDU sessions has reached a maximum number of PDU sessions of a Public Land Mobile network (PLMN) or a Standalone Non-Public Network (SNPN) in the 5GS. The UE selects a Packet Data Network (PDN) connection from one or more PDN connections maintained by the UE, wherein the UE initiates a PDN connection release procedure to release the selected PDN connection. The UE establishes a new PDU session after the selected PDN connection is released. The selected PDN connection is established as a user-plane resource for an MA PDU session on 3GPP access, and it is counted as an active PDU session in the PLMN/SNPN. In one embodiment, the UE initiates a UE-requested PDN disconnect procedure by sending a PDN DISCONNECT REQUEST message to the network. In another embodiment, the UE locally releases the selected PDN connection and performs a normal and periodic TAU with the network.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary Public Land Mobile network (PLMN) or a Standalone Non-Public Network (SNPN) and a method for PDU session establishment when the maximum number of active PDU sessions has been reached in the PLMN/SNPN in accordance with one novel aspect.
Figure 2 illustrates simplified block diagrams of a user equipment (UE) and a network entity in accordance with embodiments of the current invention.
Figure 3 illustrates different scenarios for a multiple-access PDU (MA PDU) session having 3GPP 5GS/PDN leg and/or non-3GPP 5GS leg, and corresponding determination as active PDU sessions.
Figure 4 is a sequence flow between a UE and 5GS for determining active PDU sessions in 5GS and a UE-initiated PDN release procedure in EPS followed by a PDU session establishment procedure in 5GS when the maximum active PDU sessions of PLMN/SNPN is reached in accordance with one novel aspect.
Figure 5 is a flow chart of a method of handling a PDU session establishment procedure when the maximum number of PDU sessions has been reached in 5GS in accordance with one novel aspect of the present invention.

### DETAILED DESCRIPTION

Reference will now be made in detail to some embodiments of the invention, examples of which are illustrated in the accompanying drawings.

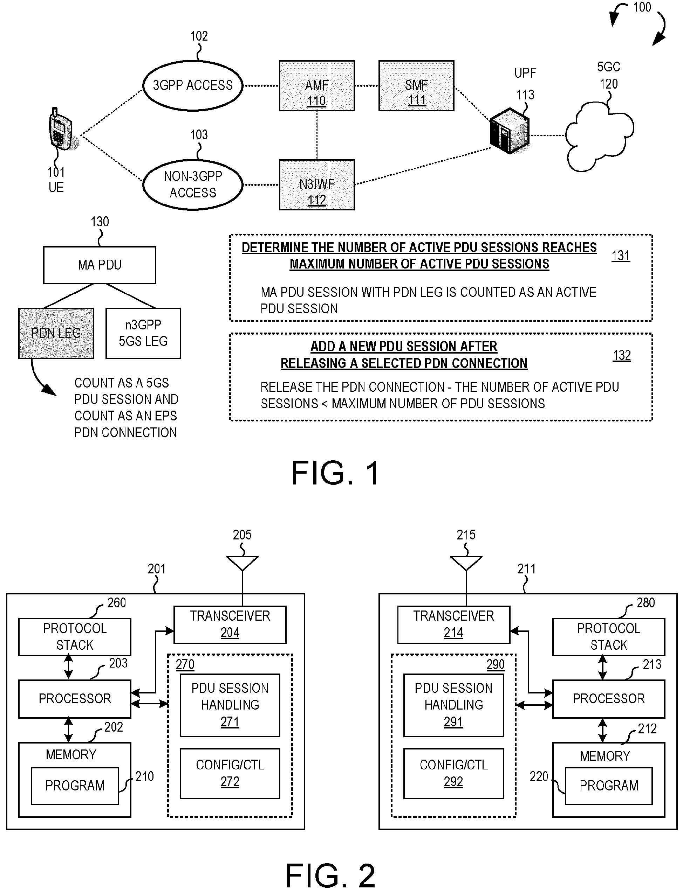

Figure 1 illustrates an exemplary Public Land Mobile network (PLMN) or a Standalone Non-Public Network (SNPN) and a method for PDU session establishment when the maximum number of active PDU sessions has been reached in the PLMN/SNPN in accordance with one novel aspect. 5G new radio (NR) network 100 includes a user equipment (UE) 101, a 3GPP access 102 (e.g., a 3GPP radio access network (RAN)), a non-3GPP access 103 (e.g., a non-3GPP RAN), an access and mobility management function (AMF) 110, a session management function (SMF) 111, a non-3GPP interworking function (N3IWF) 112, a user-plane function (UPF) 113, and a 5G core (5GC) data network 120. The AMF 110 communicates with the base stations in the 3GPP access 102, the SMF 111, and the UPF 113 for access and mobility management of wireless access devices in the 5G network 100. The SMF 111 is primarily responsible for interacting with the decoupled data plane, creating, updating, and removing PDU sessions and managing session context with the UPF 113. The N3IWF 112 interfaces to 5G core network control plane functions, responsible for routing messages outside 5G RAN.

In Access Stratum (AS) layer, RAN provides radio access for the UE 101 via a radio access technology (RAT). In Non-Access Stratum (NAS) layer, the AMF 110 and the SMF 111 communicate with RAN and 5GC for access and mobility management and PDU session management of wireless access devices in the 5G network 100. The 3GPP access 102 may include base stations (gNBs or eNBs) providing radio access for the UE 101 via various 3GPP RATs including 5G, 4G, and 3G/2G. The non-3GPP access 103 may include access points (APs) providing radio access for the UE 101 via non-3GPP RAT including WiFi. The UE 101 can obtain access to data network 120 through 3GPP access 102, AMF 110, SMF 111, and UPF 113. The UE 101 can obtain access to data network 120 through non-3GPP access 103, N3IWF 112, AMF 110, SMF 111, and UPF 113. The UE 101 may be equipped with a single radio frequency (RF) module or transceiver or multiple RF modules or transceivers for services via different RATs/CNs. In some examples, UE 101 may be a smart phone, a wearable device, an Internet of Things (IoT) device, a tablet, etc.

In 5G, a PDU session defines the association between the UE and the data network that provides PDU connectivity service. Each PDU session is identified by a PDU session ID, and may include multiple QoS flows and QoS rules. Each PDU session can be established over a 3GPP RAN, or over a non-3GPP access. 5G session management (5GSM) for PDU sessions over both 3GPP access and non-3GPP access are managed by AMF and SMF via NAS signaling. In 5GS, UEs that can be simultaneously connected to both 3GPP access and non-3GPP access (using NAS signalling), thus the 5GS is able to take advantage of these multiple accesses to improve the user experience and optimize the traffic distribution across various accesses. Accordingly, 3GPP introduced MA PDU sessions in 5GS. An MA PDU session uses one 3GPP access network or one non-3GPP access network at a time, or simultaneously one 3GPP access network and one non-3GPP access network.

In addition, ATSSS (Access Traffic Steering, Switching, Splitting) is an optional feature that can be supported by the UE and the 5GC network to route data traffic across 3GPP access and non-3GPP access networks for the established MA PDU session. At any given time, the MA PDU session can have user-plane resources established on both 3GPP access (also referred as 3GPP 5GS leg) and non-3GPP access (also referred as non-3GPP 5GS leg), or on one access only (either 3GPP access or non-3GPP 5GS access). Furthermore, to utilized the broader coverage of LTE as compared to NR, a 4G EPS PDN connection can be established as the user-plane resource for a corresponding MA PDU session over 3GPP access (also referred as 3GPP PDN leg). When the number of active 5GS PDU sessions reach the network's (PLMN or SNPN) maximum number of 5GS PDU sessions, a solution is sought on how to establish a new 5GS PDU session.

In accordance with one novel aspect, a method of handling a PDU session establishment procedure when the maximum number of PDU sessions has been reached in 5GS is proposed. In the example of Figure 1, UE 101 establishes and maintains a number of SA PDU sessions and MA PDU sessions, including MA PDU (130). MA PDU 130 is established on both 3GPP access and non-3GPP access, and the MA PDU session has one 3GPP PDN leg and one non-3GPP WiFi leg. The PDN connection is established as the user-plane resource on 3GPP for the MA PDU session. If UE 101 wants to establish more PDU sessions, then UE 101 needs to check whether the number of active PDU sessions has reached a maximum number of active PDU sessions, as defined for the PLMN/SNPN in the 5GS. In step 131, UE 101 determines the number of PDU sessions that are established and currently active in the network, and detects that the number has reached the maximum number of PDU sessions allowed in the PLMN/SNPN. Note that an MA PDU session (e.g., MA PDU 130) with a 3GPP PDN leg is also counted as an active PDU session in 5GS.

In step 132, UE 101 decides to release a selected PDN connection for the purpose of adding a new PDU session. In order to release a 5GS MA PDU session which has an EPS PDN connection established as a user-plane resource over 3GPP access, two actions may be needed. First action is to release the PDN connection established as a user-plane resource of the MA PDU session. Second action is to release the user-plane resource, if any, established on non-3GPP access of the MA PDU session. For UE triggered MA PDU release, the UE initiates a PDN disconnect procedure under the first action, and initiates a PDU session release procedure under the second action. After the PDN connection and the MA PDU session is released, the number of active PDU session becomes less than the maximum number of PDU sessions allowed in the PLMN/SNPN, and UE 101 can successfully establish a new PDU session.

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes PDU session handling circuit 291 that handles PDU establishment, modification, and release procedures, and configuration and control circuit 292 that provides different parameters to configure and control UE of related functionalities including mobility management and PDU session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network.

In one example, control function modules and circuits 270 includes a PDU session handling circuit 271 that performs MA PDU session establishment, modification, and release procedures with the network, and a config and control circuit 272 that handles configuration and control parameters for mobility management and session management. When the UE determines that the number of active PDU sessions has reached the maximum number of active PDU sessions allowed in the PLMN/SNPN network, the UE releases a PDN connection that is established as the user-plane resource on 3GPP of an MA PDU session. As a result, the UE is then able to establish a new PDU session, e.g., an emergency PDU session if needed. The UE can release the PDN connection via local release or via explicit signaling to the network.

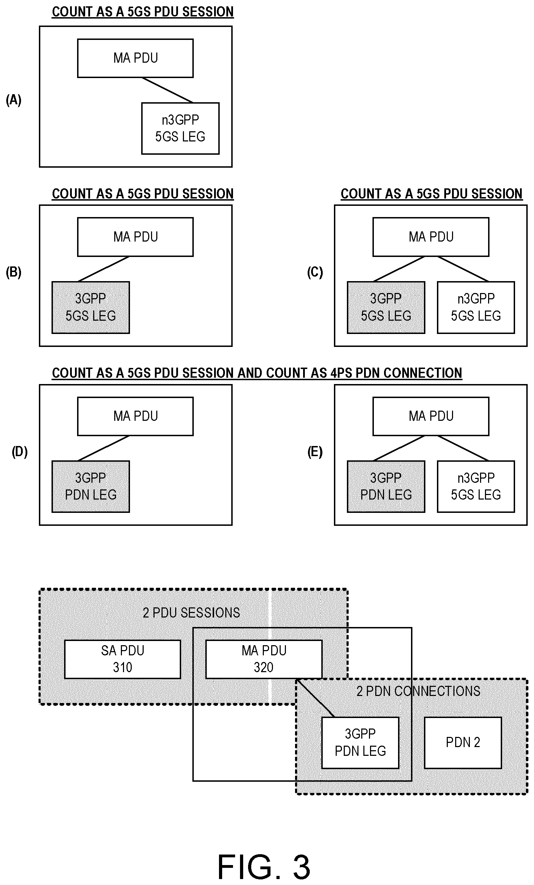

Figure 3 illustrates different scenarios for a multiple-access PDU (MA PDU) session having 3GPP 5GS/PDN leg and/or non-3GPP 5GS leg, and the determination of active and maximum PDU sessions. Since a PDN connection can be used as a user-plane resource of an MA PDU session, thus for an active MA PDU session, possible scenarios are the following, as depicted in Figure 3: A) an MA PDU session with only non-3GPP leg (user-plane resources established on non-3GPP access); B) an MA PDU session with only 3GPP leg (user-plane resources established on 3GPP access); C) an MA PDU session with 3GPP leg + non-3GPP leg (user-plane resources established on 3GPP access and non-3GPP access); D) an MA PDU session with only PDN leg (PDN connection is established as a user-plane resource); and E) an MA PDU session with PDN leg + non-3GPP leg (PDN connection is established as a user-plane resource, and user-plane resources established on non-3GPP access). For case (A), the MA PDU only having a non-3GPP leg is counted as an active PDU session. For case (D), "an MA PDU session with only PDN leg" is counted in the number of active PDU sessions even it does not have 5GS 3GPP leg nor 5GS non-3GPP leg. Also note that case D) "an MA PDU session with only PDN leg" is counted not only as an active PDU session, but also counted as an active PDN connection. For case (E), the UE need to release the entire MA PDU in order to establish a new PDU if the UE has reached the maximum number of PDU sessions.

The maximum number of PDU sessions which a UE can establish in a PLMN/SNPN is limited by whichever is the lowest of: the maximum number of PDU session IDs allowed by the protocol, the PLMN's or SNPN's maximum number of PDU sessions and the UE's implementation-specific maximum number of PDU sessions. If during a UE-requested PDU session establishment procedure the UE receives an indication from the 5GS that the maximum number of PDU sessions has been reached, then the UE determines the maximum number of PDU sessions as the number of active PDU sessions it has.

The PLMN/SNPN's maximum number of PDU sessions applies to the PLMN/SNPN in which the 5GSM cause #65 "maximum number of PDU sessions reached" is received. If the maximum number of established PDU sessions is reached at the UE, and the upper layers of the UE request connectivity to a DNN, then the UE should not send a PDU SESSION ESTABLISHMENT REQUEST message unless an already established PDU session is released. If the UE needs to release an established PDU session, choosing which PDU session to release is implementation specific. If the UE needs to release a PDU session in order to request an emergency PDU session, it shall either perform a local release of a PDU session; or release a PDU session via explicit 5G(SM) signaling (5G UE-requested PDU session release procedure).

In one novel aspect, if a UE has a PDN connection that is used as the user-plane resource for an MA PDU session, then when the maximum number of PDU sessions has reached, the UE can release the 4G PDN connection so that a new PDU session can be established. In the example of Figure 3, the UE has established two PDU sessions, one SA PDU session 310 and one MA PDU session 320. The MA PDU session 320 has a 3GPP PDN leg, therefore it counts as an active PDU session and an active PDN connection. If the maximum number of PDU sessions is two, then the UE cannot establish more PDU session, even emergency PDU session. In response, the UE can release the PDN connection of the MA PDU session, and then the UE should be able to establish new PDU session.

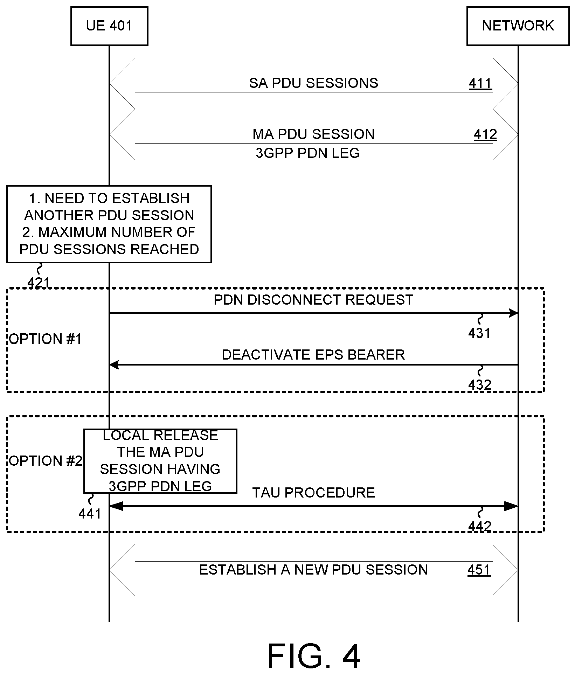

Figure 4 is a sequence flow between a UE and 5GS for determining active PDU sessions in 5GS and a UE-initiated PDN release procedure in EPS followed by a PDU session establishment procedure in 5GS when the maximum active PDU sessions of PLMN/SNPN is reached in accordance with one novel aspect. In step 411, UE 401 maintains a number of SA PDU sessions. In step 412, UE 401 maintains an MA PDU session, having a PDN connection established as the user-plane resource on 3GPP for the MA PDU session (e.g., a 3GPP PDN leg). In step 421, UE 401 determines whether the UE needs to establish another PDU session, and whether the number of active PDU sessions has reached the maximum active PDU sessions allowed in the PLMN/SNPN. If so, then UE 401 should not send a PDU session establishment request unless an existing PDU session is released.

In one novel aspect, UE 401 UE selects the 4G PDN connection of the MA PDU session and decides to release this selected 4G PDN connection so that a new 5G PDU session can be established. UE 401 can release the selected 4G PDN connection under two options. Under option #1, UE 401 releases the 4G PDN connection using explicit 4G ESM signaling. In step 431, UE 401 sends a 4G PDN DISCONNECT REQUEST message to the network. In step 432, UE 401 receives a 4G DEACTIVATE EPS BEARER message from the network to release the 4G PDN connection. Under option #2, UE 401 performs local releasing of the MA PDU having the PDN leg (step 441). In step 442, UE 401 performs a 4G tracking area update (TAU) procedure with the network to indicate the 4G EPS bearer context status to the network. In step 451, after the release of the 4G PDN connection, UE 401 establishes a new 5G PDU session in 5GS. In one example, the new 5G PDU session is an emergency PDU session.

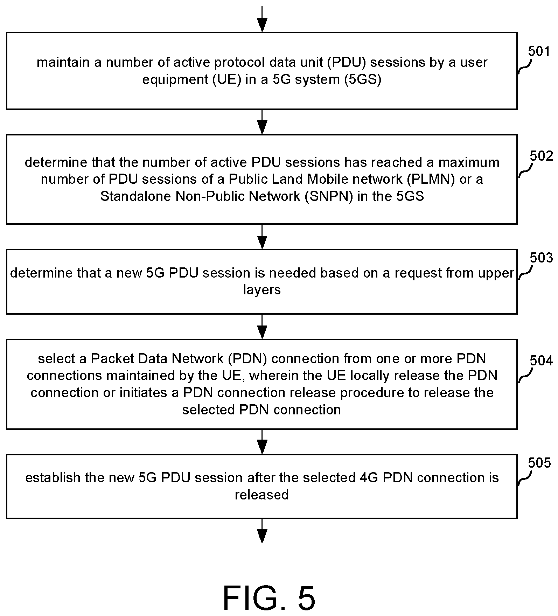

Figure 5 is a flow chart of a method of handling a PDU session establishment procedure when the maximum number of PDU sessions has been reached in 5GS in accordance with one novel aspect of the present invention. In step 501, a UE maintains a number of active protocol data unit (PDU) sessions in a 5G system (5GS). In step 502, the UE determines that the number of active PDU sessions has reached a maximum number of PDU sessions of a Public Land Mobile network (PLMN) or a Standalone Non-Public Network (SNPN) in the 5GS. In step 503, the UE determines that a new 5G PDU session is needed based on a request from upper layers. In step 504, the UE selects a Packet Data Network (PDN) connection from one or more PDN connections maintained by the UE, wherein the UE initiates a PDN connection release procedure to release the selected PDN connection; or the UE locally release the PDN connection. In step 504, the UE establishes the new PDU session after the selected PDN connection is released. The selected PDN connection is established as a user-plane resource for an MA PDU session on 3GPP access, and it is counted as an active PDU session in the PLMN/SNPN. In one embodiment, the UE initiates a UE-requested PDN disconnect procedure by sending a PDN DISCONNECT REQUEST message to the network. In another embodiment, the UE locally releases the selected PDN connection and performs a normal and periodic TAU with the network.

## Claims

1. A method, comprising:
maintaining (501) a number of active 5G protocol data unit, PDU, sessions by a user equipment, UE, in a 5G system, 5GS;
determining (502) that the number of active 5G PDU sessions has reached a maximum number of 5G PDU sessions of a Public Land Mobile network, PLMN, or a Standalone Non-Public Network, SNPN, in the 5GS;
determining (503) that a new 5G PDU session is needed based on a request from upper layers;
**characterized by**
selecting (504) a 4G Packet Data Network, PDN, connection from one or more 4G PDN connections maintained by the UE, wherein the UE releases the 4G PDN connection; and
establishing (505) the new 5G PDU session after the selected 4G PDN connection is released,
wherein the selected 4G PDN connection is established as a user-plane resource for Multi-Access, MA, PDU session.

2. The method of Claim 1, wherein the selected PDN connection is established as the only user-plane resource for the MA PDU session.

3. The method of Claim 1, wherein the UE releases the selected 4G PDN connection by initiating a UE-requested PDN disconnect procedure by sending a PDN DISCONNECT REQUEST message to the network.

4. The method of Claim 3, wherein the UE receives a DEACTIVATE EPS BEARER CONTEXT message from the network in response to the PDN DISCONNECT REQUEST message.

5. The method of Claim 1, wherein the UE releases the selected PDN connection locally and performs a periodic tracking area update, TAU, with the network.

6. The method of Claim 5, wherein an EPS bearer context status IE is included in the TAU REQUEST message.

7. The method of Claim 1, wherein the new PDU session is an emergency PDU session or a PDU session to a DNN, Data Network Name.

8. The method of Claim 1, wherein the UE initiates a UE-requested PDU session establishment procedure over 5G non-3GPP access to establish the new 5G PDU session.

9. A User Equipment, UE (201), comprising:
a protocol data unit, PDU, session handling circuit (271) that is configured to maintain a number of active 5G PDU sessions in a 5G system, 5GS;
a control circuit (272) that is configured to determine that the number of active 5G PDU sessions has reached a maximum number of 5G PDU sessions of a Public Land Mobile network, PLMN, or a Standalone Non-Public Network, SNPN, in the 5GS;
said control circuit (272) is further configured to determine a new 5G PDU session is needed based on a request from upper layers;
**characterized by**
a Packet Data Network, PDN, connection handling circuit that is configured to select a 4G PDN connection from one or more 4G PDN connections maintained by the UE, wherein the UE is configured to initiate to release the selected PDN connection, and wherein the UE is configured to establish the new 5G PDU session after the selected 4G PDN connection is released,
wherein the selected 4G PDN connection is established as a user-plane resource for a Multi-Access, MA, PDU session.

10. The UE of Claim 9, wherein the selected PDN connection is established as the only user-plane resource for the MA PDU session.

11. The UE of Claim 9, wherein the UE is configured to release the selected 4G PDN connection by initiating a UE-requested PDN disconnect procedure by sending a PDN DISCONNECT REQUEST message to the network.

12. The UE of Claim 11, wherein the UE is configured to receive a DEACTIVATE EPS BEARER CONTEXT message from the network in response to the PDN DISCONNECT REQUEST message.

13. The UE of Claim 9, wherein the UE is configured to release the selected PDN connection locally and to perform a periodic tracking area update, TAU, with the network.

14. The UE of Claim 13, wherein an EPS bearer context status IE is included in the TAU REQUEST message.

15. The UE of Claim 9, wherein the new PDU session is an emergency PDU session or a PDU session to a DNN, Data Network Name; and
wherein the UE is configured to initiate a UE-requested PDU session establishment procedure over 5G non-3GPP access to establish the new 5G PDU session.

## Patentansprüche

1. Verfahren, aufweisend:
Aufrechterhalten (501) einer Anzahl aktiver 5G-Protokolldateneinheitssitzungen, PDU-Sitzungen, durch ein Benutzergerät, UE, in einem 5G-System, 5GS;
Feststellen (502), dass die Anzahl aktiver 5G-PDU-Sitzungen eine maximale Anzahl von 5G-PDU-Sitzungen eines öffentlichen Landmobilfunknetzes, PLMN, oder eines eigenständigen nicht-öffentlichen Netzes, SNPN, im 5GS erreicht hat;
Feststellen (503), dass eine neue 5G-PDU-Sitzung auf der Grundlage einer Anforderung von höheren Schichten erforderlich ist;
**gekennzeichnet durch**
Auswählen (504) einer 4G-Paketdatennetzwerkverbindung, 4G-PDN-Verbindung, aus einer oder mehreren 4G-PDN-Verbindungen, die von dem UE aufrechterhalten werden, wobei das UE die 4G-PDN-Verbindung freigibt; und
Einrichten (505) der neuen 5G-PDU-Sitzung, nachdem die ausgewählte 4G-PDN-Verbindung freigegeben wurde,
wobei die ausgewählte 4G-PDN-Verbindung als Benutzer-Ebene-Ressource für die Multi-Access-, MA-, PDU-Sitzung eingerichtet wird.

2. Verfahren nach Anspruch 1, bei dem die ausgewählte PDN-Verbindung als einzige Benutzer-Ebene-Ressource für die MA-PDU-Sitzung eingerichtet wird.

3. Verfahren nach Anspruch 1, bei dem das UE die ausgewählte 4G-PDN-Verbindung freigibt, indem es ein vom UE angefordertes PDN-Trennungsverfahren durch Senden einer PDN-DISCONNECT REQUEST-Nachricht an das Netzwerk initiiert.

4. Verfahren nach Anspruch 3, bei dem das UE als Antwort auf die PDN DISCONNECT REQUEST-Nachricht eine DEACTIVATE EPS BEARER CONTEXT-Nachricht vom Netzwerk empfängt.

5. Verfahren nach Anspruch 1, bei dem das UE die ausgewählte PDN-Verbindung lokal freigibt und ein periodisches Tracking Area Update, TAU, mit dem Netzwerk durchführt.

6. Verfahren nach Anspruch 5, bei dem ein EPS-Trägerkontextstatus-IE in der TAU-REQUEST-Nachricht enthalten ist.

7. Verfahren nach Anspruch 1, bei dem die neue PDU-Sitzung eine Notfall-PDU-Sitzung oder eine PDU-Sitzung zu einem DNN, Data Network Name, ist.

8. Verfahren nach Anspruch 1, bei dem das UE ein vom UE angefordertes PDU-Sitzungsaufbauverfahren über einen 5G-Nicht-3GPP-Zugang initiiert, um die neue 5G-PDU-Sitzung aufzubauen.

9. Benutzergerät, UE (201), aufweisend:
eine Protokolldateneinheit-, PDU, Sitzungsbearbeitungsschaltung (271), die so konfiguriert ist, dass sie eine Anzahl aktiver 5G-PDU-Sitzungen in einem 5G-System, 5GS, aufrechterhält;
eine Steuerschaltung (272), die so konfiguriert ist, dass sie feststellt, dass die Anzahl aktiver 5G-PDU-Sitzungen eine maximale Anzahl von 5G-PDU-Sitzungen eines öffentlichen Landmobilfunknetzes, PLMN, oder eines eigenständigen nicht-öffentlichen Netzes, SNPN, im 5GS erreicht hat;
wobei die Steuerschaltung (272) ferner so konfiguriert ist, dass sie auf der Grundlage einer Anforderung von höheren Schichten feststellt, dass eine neue 5G-PDU-Sitzung erforderlich ist;
**gekennzeichnet durch**
eine Paketdatennetzwerk-, PDN-, Verbindungshandhabungsschaltung, die so konfiguriert ist, dass sie eine 4G-PDN-Verbindung aus einer oder mehreren 4G-PDN-Verbindungen auswählt, die von dem UE aufrechterhalten werden, wobei das UE so konfiguriert ist, dass es die Freigabe der ausgewählten PDN-Verbindung initiiert, und wobei das UE so konfiguriert ist, dass es die neue 5G-PDU-Sitzung einrichtet, nachdem die ausgewählte 4G-PDN-Verbindung freigegeben wurde, wobei die ausgewählte 4G-PDN-Verbindung als Benutzer-Ebene-Ressource für eine Multi-Access-, MA-, PDU-Sitzung eingerichtet wird.

10. UE nach Anspruch 9, bei dem die ausgewählte PDN-Verbindung als einzige Benutzer-Ebene-Ressource für die MA-PDU-Sitzung eingerichtet wird.

11. UE nach Anspruch 9, bei dem das UE so konfiguriert ist, dass es die ausgewählte 4G-PDN-Verbindung freigibt, indem es ein von dem UE angefordertes PDN-Trennungsverfahren initiiert, indem es eine PDN DISCONNECT REQUEST-Nachricht an das Netzwerk sendet.

12. UE nach Anspruch 11, bei dem das UE so konfiguriert ist, dass es als Antwort auf die PDN DISCONNECT REQUEST-Nachricht eine DEACTIVATE EPS BEARER CONTEXT-Nachricht vom Netzwerk empfängt.

13. UE nach Anspruch 9, bei dem das UE so konfiguriert ist, dass es die ausgewählte PDN-Verbindung lokal freigibt und ein periodisches Tracking Area Update, TAU, mit dem Netzwerk durchführt.

14. UE nach Anspruch 13, bei dem ein EPS-Trägerkontextstatus-IE in der TAU-REQUEST-Nachricht enthalten ist.

15. UE nach Anspruch 9, bei dem die neue PDU-Sitzung eine Notfall-PDU-Sitzung oder eine PDU-Sitzung zu einem DNN, Data Network Name, ist; und
wobei das UE so konfiguriert ist, dass es ein von dem UE angefordertes PDU-Sitzungsaufbauverfahren über einen 5G-Nicht-3GPP-Zugang initiiert, um die neue 5G-PDU-Sitzung aufzubauen.

## Revendications

1. Procédé comprenant :
maintenir (501) d'un nombre de sessions d'unité de données de protocole 5G actives, sessions PDU, par un appareil utilisateur, UE, dans un système 5G, 5GS;
déterminer (502) que le nombre de sessions PDU 5G actives a atteint un nombre maximal de sessions PDU 5G d'un réseau mobile terrestre public, PLMN, ou d'un réseau autonome non public, SNPN, dans le 5GS;
déterminer (503) qu'une nouvelle session PDU 5G est nécessaire sur la base d'une demande provenant de couches supérieures;
**caractérisé par**
sélecter (504) une connexion de réseau de données par paquets 4G, connexion 4G-PDN, parmi une ou plusieurs connexions 4G-PDN maintenues par l'UE, l'UE libérant la connexion 4G-PDN; et
établir (505) de la nouvelle session 5G PDU après que la connexion 4G PDN sélectionnée a été libérée,
la connexion PDN 4G sélectionnée étant établie en tant que ressource de niveau utilisateur pour la session PDU à accès multiple, MA.

2. Procédé selon la revendication 1, dans lequel la connexion PDN sélectionnée est établie en tant que seule ressource de niveau utilisateur pour la session MA-PDU.

3. Procédé selon la revendication 1, dans lequel l'UE libère la connexion PDN 4G sélectionnée en lançant une procédure de déconnexion PDN demandée par l'UE en envoyant un message PDN-DISCONNECT REQUEST au réseau.

4. Procédé selon la revendication 3, dans lequel l'UE reçoit un message DEACTIVATE EPS BEARER CONTEXT du réseau en réponse au message PDN DISCONNECT REQUEST.

5. Procédé selon la revendication 1, dans lequel l'UE libère localement la connexion PDN sélectionnée et effectue une mise à jour périodique de la zone de suivi, TAU, avec le réseau.

6. Procédé selon la revendication 5, dans lequel un IE d'état de contexte de support EPS est inclus dans le message TAU-REQUEST.

7. Procédé selon la revendication 1, dans lequel la nouvelle session PDU est une session PDU d'urgence ou une session PDU vers un DNN, Data Network Name.

8. Procédé selon la revendication 1, dans lequel l'UE initie une procédure d'établissement de session PDU demandée par l'UE via un accès 5G non 3GPP afin d'établir la nouvelle session PDU 5G.

9. Appareil utilisateur, UE (201), comprenant:
un circuit de traitement de session de données de protocole, PDU (271), configuré pour maintenir un certain nombre de sessions PDU 5G actives dans un système 5G, 5GS;
un circuit de commande (272) configuré pour déterminer que le nombre de sessions PDU 5G actives a atteint un nombre maximal de sessions PDU 5G d'un réseau mobile terrestre public, PLMN, ou d'un réseau autonome non public, SNPN, dans le 5GS;
le circuit de commande (272) étant en outre configuré pour déterminer qu'une nouvelle session 5G-PDU est nécessaire sur la base d'une demande provenant de couches supérieures; **caractérisé par**
un circuit de gestion de connexion de réseau de données par paquets, PDN, configuré pour sélectionner une connexion 4G-PDN parmi une ou plusieurs connexions 4G-PDN maintenues par l'UE, l'UE étant configuré pour initier la libération de la connexion PDN sélectionnée, et dans lequel l'UE est configuré pour établir la nouvelle session PDU 5G après que la connexion PDN 4G sélectionnée a été libérée,
la connexion PDN 4G sélectionnée étant établie en tant que ressource de niveau utilisateur pour une session PDU à accès multiple, MA.

10. UE selon la revendication 9, dans lequel la connexion PDN sélectionnée est établie en tant que seule ressource de niveau utilisateur pour la session MA-PDU.

11. UE selon la revendication 9, dans lequel l'UE est configuré pour libérer la connexion PDN 4G sélectionnée en lançant une procédure de déconnexion PDN demandée par l'UE en envoyant un message PDN DISCONNECT REQUEST au réseau.

12. UE selon la revendication 11, dans lequel l'UE est configuré pour recevoir un message DEACTIVATE EPS BEARER CONTEXT du réseau en réponse au message PDN DISCONNECT REQUEST.

13. UE selon la revendication 9, dans lequel l'UE est configuré pour libérer localement la connexion PDN sélectionnée et effectuer une mise à jour périodique de la zone de suivi, TAU, avec le réseau.

14. UE selon la revendication 13, dans lequel un IE d'état de contexte de support EPS est inclus dans le message TAU REQUEST.

15. UE selon la revendication 9, dans lequel la nouvelle session PDU est une session PDU d'urgence ou une session PDU vers un DNN, Data Network Name; et
dans lequel l'UE est configuré pour lancer une procédure d'établissement de session PDU demandée par l'UE via un accès 5G non 3GPP afin d'établir la nouvelle session PDU 5G.
